# EUROPEAN PATENT SPECIFICATION

(11) **EP 2 861 953 B1**
(45) Date of publication and mention of the grant of the patent: **19.09.2018**
(21) Application number: 13728415.4
(22) Date of filing: 14.06.2013
(51) Int. Cl.: G01M 11/08, G01M 13/04, G01L 1/24, C03C 27/04

(54) **MACHINE ARRANGEMENT**
MASCHINENANORDNUNG
AGENCEMENT DE MACHINE

(30) Priority: 14.06.2012 WO PCT/EP2012/061347
(43) Date of publication of application: 22.04.2015
(73) Proprietor: Aktiebolaget SKF, 415 50 Göteborg (SE)
(72) Inventor: MOL, Hendrik Anne, NL-4254 XG Sleeuwijk (NL); SANDEN, VAN DE, John, NL-3435 DT Nieuwegein (NL); YANG, Hongyu, NL-3893 EW Zeewolde (NL)
(74) Representative: Kuhstrebe, Jochen
(86) International application number: PCT/EP2013/062358
(87) International publication number: WO 2013/186354

(56) References cited:
- GB-A- 761 662
- US-A- 5 594 819

## Description

### Technical Field

The invention relates to a machine arrangement, comprising at least one carrier, wherein a glass fiber is connected with the machine arrangement, wherein the connection between the glass fiber and the machine arrangement is established by a metallic material which metal material is connected by material bonding with the machine arrangement as well as with the glass fiber.

### Background

A machine arrangement of the generic kind is disclosed in US 5 594 819 A**.** A similar solution is shown in GB 761 662 A**.**

It is known in the art to equip a machine part of this kind with a glass fiber element to allow the measurement of different physical parameters. By doing so, a survey of the parameters becomes possible by using the fiber Bragg grating (FBG) method. By this method temperatures as well as strains of the machine arrangement can be monitored.

For doing so it is necessary to connect a glass fiber with the component. For surveying temperatures it is essential that a thermal coupling between the glass fiber and the machine arrangement is established. For monitoring strains it is necessary to mechanically connect the glass fiber with the component to be monitored.

Specifically in the latter case problems arise because the glass fiber is normally equipped with a plurality of coaxially arranged cover layers. A typical construction employs a cladding arranged around the glass fiber (core) itself; the cladding is coated by a coating layer. Then, strengthening fibers (made e. g. from aramid) are arranged at the outer circumference of the coating. Finally the strengthening fibers are cased by a hollow cylindrical cable jacket.

When a glass fiber element of this type is connected with the component a certain elasticity is inherent between the glass core and the component. Thus, specifically the measurement of strains is problematic due to the elasticity. This is specifically a problem when the component is not even or flat but if it has a spherical shape. This is typical in the case of a part of a bearing, specifically of a roller bearing.

It is an object of the present invention to propose a machine arrangement of the above mentioned kind which is designed in such a manner that a contact is established between the glass fiber core and the component which is as stiff as possible. By doing so it is aimed to monitor physical properties, especially of strains in the component, with a high degree of precision. Thus, specifically a proper measurement of stresses should become possible even at curved surfaces of the machine arrangement as is typical in the case of bearing rings.

### Summary of the invention

A solution according to the invention is characterized in that the carrier comprises a groove in which the glass fiber is arranged, wherein a filling material is arranged between the glass fiber and the carrier, wherein the glass fiber is embedded into the carrier by brazing, wherein the carrier is attached to the machine part by means of pulse arc welding.

The glass fiber is basically free from any layer as described above. An exception can be that the glass fiber is encased by a reflective cover material to ensure the conduction of light through the glass fiber.

The metallic material preferably consists of at least two different metallic materials, wherein a first metallic material encases the glass fiber and wherein a second metallic material connects the first metallic material with the machine arrangement by material bonding.

The material bonded connection between the metallic material and the machine arrangement can be established by a welding process using the metallic material.

The material bonded connection between the metallic material and the glass fiber can also be established by a welding or melting process using the metallic material.

The mentioned first metallic material can be a single metal element. In this case a preferred embodiment proposes that the first metallic material is chromium (Cr). An alternative suggests nickel (Ni) as the first metallic material.

The second metallic material can be a metal alloy. In this case the second metallic material can be an alloy of chromium (Cr) and nickel (Ni).

In a preferred embodiment of the invention, a cladding of nickel (Ni) which encases the glass fiber is provided; this cladded glass fiber is then coated with a nickel-chromium-alloy.

The second metallic material can have at least partially a thickness measured in the direction perpendicular to the longitudinal axis of the glass fiber of at least 0.3 mm, preferably of at least 0.5 mm.

The glass fiber can be arranged on a curved surface of the machine arrangement, especially on a cylindrical or flat surface of a carrier of the machine arrangement. The carrier in turn being arranged on a bearing ring of the machine arrangement.

Thereby, the glass fiber can be attached to a cylindrical or flat surface of the machine arrangement. Also, it is possible to locate the glass fiber in a groove which is machined for the glass fiber into the machine arrangement.

A solution is a machine arrangement, comprising or being at least one carrier, wherein a glass fiber is connected with the machine arrangement. The connection between the glass fiber and the machine arrangement is established by a metallic material which metal material is connected by material bonding with the machine arrangement as well as with the glass fiber.

Suitably the glass fiber is encased by a reflective cover material. The metallic material can consists of at least two different metallic materials, wherein a first metallic material encases the glass fiber and wherein a second metallic material connects the first metallic material with the machine arrangement by material bonding. The material bonded connection between the metallic material and the machine arrangement can be established by a vacuum brazing process using the metallic material. The glass fiber is connected with the carrier. The carrier can be made of stainless steel. The first metallic material is suitably a single metal element such as nickel (Ni). The second metallic material is suitably a metal alloy such as a brazing alloy comprising silver (Ag) and copper (Cu) such as Cusin-1 ABA. The carrier can be connected by means of pulse arc welding to a machine part made of hardened steel.

All the features can be individually joined together in any desired way as long as no conflicting features are joined.

By the proposed design a stiff and direct connection is established between the glass fiber and the component to be monitored so that physical parameters - especially temperatures and strains - can be detected in a precise way.

### Brief description of the drawings

The drawings show embodiments of the invention.
- Fig. 1: shows in a perspective view a section of a carrier intended to be attached to an outer bearing ring of a roller bearing, on which a glass fiber is fixed,
- Fig. 2: shows the cross section A-A according to Fig. 1,
- Fig. 3: shows a perspective view of a glass fiber which is fixed to a carrier similar to Fig. 2,
- Fig. 4: shows a front view of a glass fiber which is fixed to a carrier, similar to Fig. 3,
- Fig. 5: shows a perspective view of a glass fiber which is fixed in a groove of a careier,
- Fig. 6: shows a front view of a glass fiber which is fixed in a groove of a carrier, similar to Fig. 5,
- Fig. 7a: shows the process of fixing a glass fiber in a groove of a carrier in a first, early state,
- Fig. 7b: shows the process of fixing a glass fiber in a groove of a carrier in a second, later state.

### Detailed description of the invention

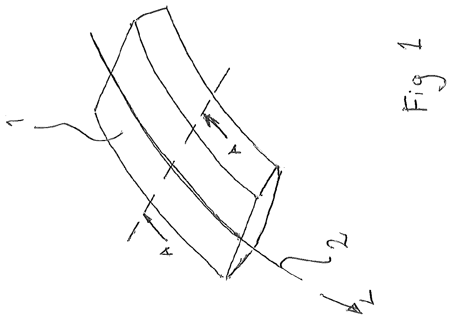

In Fig. 1 a machine arrangement 1 is shown being a carrier to be attached to an outer bearing ring of a roller bearing of the machine arrangement. The carrier 1 has an outer spherical surface which is to be monitored with respect to strains which act in the machine part. The survey of those strains is carried out by the fiber Bragg grating (FBG) method which is known as such. Reference is made e. g. to US 6,923,048 B2 where this technology is explained in more detail.

For doing so a glass fiber 2 is securely fixed on the spherical, i. e. cylindrical outer circumference of the carrier 1. The glass fiber 2 has a longitudinal direction L which extends in the circumferential direction of the carrier 1.

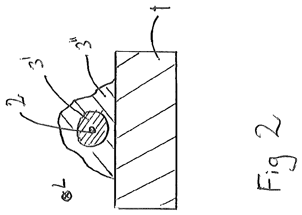

Details concerning the fixation of the glass fiber 2 at the carrier 1 can be seen from Fig. 2.

Here, it can be seen that the glass fiber 2 is basically the pure glass element - possibly covered only by a reflective coating to ensure proper light conduction within the glass fiber - which is then connected with the carrier 1 by means of metallic material 3.

Here, two different metallic materials are employed:
A first metallic material 3' coats the glass fiber 2 itself. The preferred material is chromium (Cr).

The first metallic material 3' it then connected with a second metallic material 3". This material is preferably an alloy, preferably from chromium (Cr) and nickel (Ni).

Thus, a material bonding is established between the glass fiber 2 and the machine part 1 to be monitored. This means, all strains in the machine part 1 are directly transferred into the glass fiber 2. Thus, the precondition is assured for a precise measurement of physical parameters of the machine part 1.

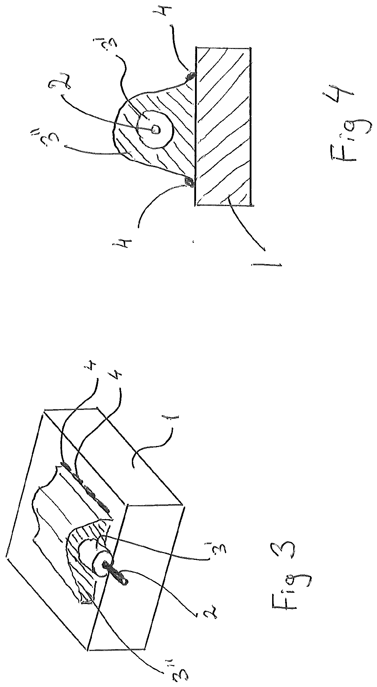

In Fig. 3 a further embodiment of the invention is shown. Here, the glass fiber 2 is provided with a cladding 3' from a first metallic material being nickel (Ni). This cladding is embedded in a second metallic material 3" being a nickel-chromium-alloy. The second metallic material 3" is fixed on the carrier 1 by means of welding or brazing 4.

In Fig. 4 a similar solution is shown. Here, the glass fiber 2 is again embedded in a cladding of nickel 3'. This cladding is covered by a coating 3" of a nickel-chromium-alloy. This coating 3" is fixed with the carrier 1 by means of welding or brazing 4.

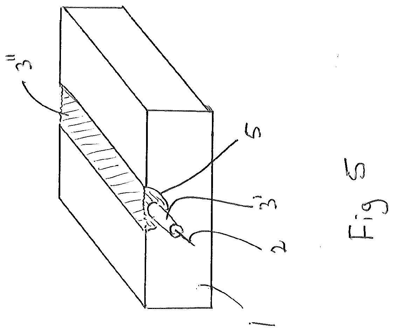

In Fig. 5 an alternative is shown. Here the carrier 1 has a groove 5, in which the glass fiber 2 is inserted and securely fixed. For doing so, the glass fiber 2 is cladded with a cover 3' from nickel. Then, the covered glass fiber 2 is fixed on the carrier 1 by a nickel-chromium-alloy 3 "which fills up the groove 5.

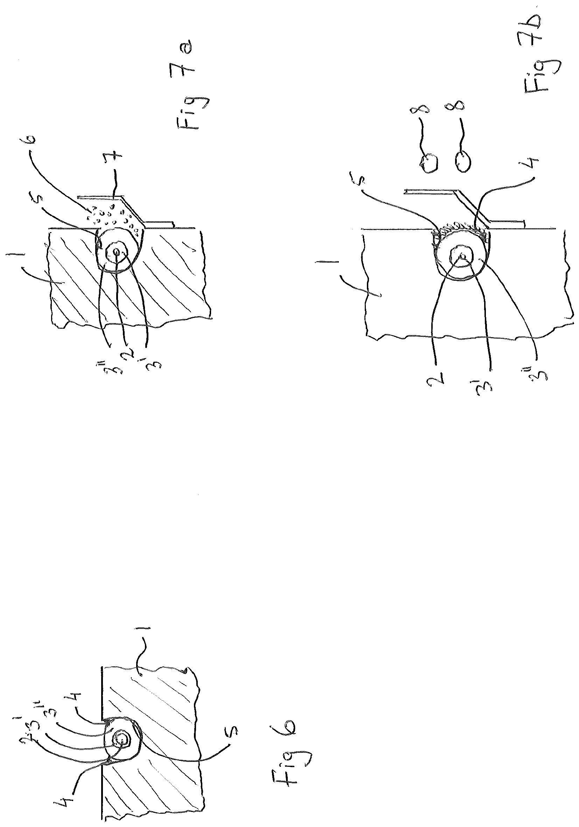

A similar solution is shown in Fig. 6. Here, the carrier 1 again has a groove 5 in which the glass fiber 2 is inserted. The glass fiber 2 is embedded in a nickel cladding 3'. The cladding 3' is embedded by a nickel-chromium-alloy 3". The fixation of the coating of nickel-chromium-alloy 3" is fixed in the groove 5 by means of welding or brazing 4.

In Fig. 7a and Fig. 7b a process is depicted by which a fixation as shown in Fig. 6 can be realized. Here, a container 7 is arranged at the carrier 1 when the embedded glass fiber 2 (coated again by a nickel layer 3' and a layer form a nickel-chromium-alloy 3") is arranged in a groove 5 in the carrier 1. The container 7 is filled with braze paste 6. This is shown in Fig. 7a.

Heating elements 8 being inductive heaters are arranged near the container 7. Due to the heat produced by the inductive heaters 8 the braze paste 6 melts and forms the brazing 4 which is shown in Fig. 7b. Afterwards, the container 7 is removed.

The proposed connection technology can be used to fix a glass fiber 2 firmly between two points on the carrier 1 to use the fiber Bragg grating (FBG) method for measurement of specific data.

For the cladding of the glass fiber 2 itself, pure material - specifically nickel (Ni) or chromium (Cr) - is preferred. This gives a very dense and defect free coating.

For the outer coating a selection can be made from suitable alloys between nickel (Ni) and chromium (Cr) with or without additional elements such as B, Fe, Mn, Si, Ti, which can be selected to obtain a harder or more ductile coating and/or to reduce the melting temperature for the coating or later brazing or welding to be applied.

Beside pure nickel also nickel can be used which is alloyed with a maximum of 2 weight-% titan (Ti), 1 weight-% silizium (Si) or a nickel-alloy with a maximum of 3.5 weight-% boron (B), 4.5 weight-% silizium (Si), between 5 and 7 weight-% chromium (Cr) and about 4 weight-% ferrum (Fe).

For the outer coating 3" pure chromium (Cr) can be employed but also chromium alloyed with a maximum of 20 to 60 weight-% nickel (Ni). The outer coating has preferably between 0.2 to 0.5 mm wall thickness in order to enable microlaser welding or brazing,

Here, a nickel-chromium-alloy is preferred with 20 to 80 weight-% nickel (Ni) and a balance of chromium (Cr). Also, an alloy has been found suitable with 20 to 70 weight-% nickel (Ni), 1 to 5 weight-% mangan (Mn), a maximum of 1 weight-% silizium (Si) and a balance of chromium (Cr). Also the addition of copper (Cu) can be beneficial.

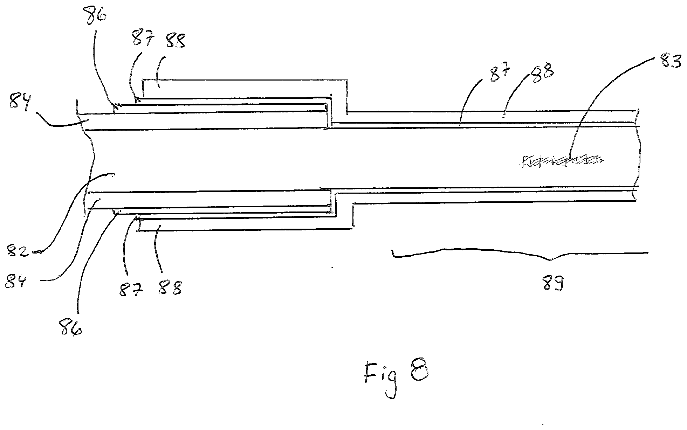

In Fig. 8 a glass fiber with core 82, suitably working up to 1000 degrees Centigrade, comprising an in-core Bragg grating 83 has been prepared to be vacuum brazed to a stainless steel carrier. The glass fiber 82 typically comprises a copper coating 84 which outside the attachment area 89 is protected by a thin layer of electroplated Ni 86 during activation. A thin chemical Ni layer 87 is then added to make the bare fiber part electrically conducting and finally an electroplated Ni-layer 88, about 20 micrometers thick is added. The length 89 along which the glass fiber 82 is to be mounted to a carrier will be bare before the Ni layers 87, 88 are added and will comprise one or more in-core Bragg gratings 83.

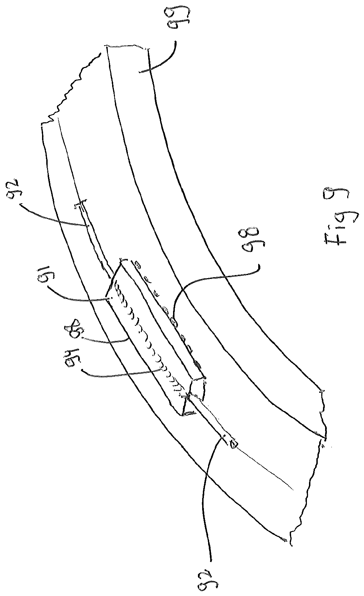

In Fig. 9 a carrier 91, suitably of 430 stainless steel, is mounted on an outer ring 99 of a bearing. This is of course one of many different location on a bearing that the carrier can be mounted. The carrier described can suitably be mounted on any hardened steel, especially hardened bearing steel. The carrier 91 can suitably be in the range of 25 millimeter long in the direction of a mounted optical fiber 92, 5 millimeter wide and 1 millimeter thick. It is important that the carrier 91 is thin so that the optical fiber 92 is as close as possible to the part it is supposed to measure as the optical fiber is on one side and the machine part on the other side. The carrier 91 suitable comprises a groove with a diameter/depth in the range of 0.3 millimeter for a nickel coated optical fiber 92. A prepared optical fiber 92, suitably of the kind according to Fig. 8, is put in the groove and a filling material 94 is added between the nickel coated fibers and the stainless steel carrier 91. The filling material can suitably be brazing alloy Cusin-1 ABA paste. The optical fiber 92 is then embedded into the carrier 91 by brazing, suitably vacuum brazing. After the optical fiber 92 has been embedded into or onto the carrier 91, the carrier 91 is then attached to a machine part which is to be measured as to for example temperature and/or strain. The attachment of the carrier 91 to, as in this example, an outer bearing ring, is according to this embodiment done by pulse arc welding, such as micro TIG welding in an Argon atmosphere. The optical fiber 92 will then have a stiff connection with the machine part it is meant to measure.

### Reference Numerals:

- 1: Machine arrangement (carrier)
- 2: Glass fiber
- 3: Metallic material
- 3': First metallic material
- 3": Second metallic material
- 4: Welding / Brazing
- 5: Groove
- 6: Braze paste
- 7: Container
- 8: Heating element (induction heating element)
- 82: Glass fiber with core, suitably working up to 1000 degrees C
- 83: In-core Bragg grating
- 84: Copper, Cu, coating of fiber
- 86: Thin electroplated Ni to protect the Cu during activation
- 87: Thin chemical Ni layer to make the bare fiber part electrically conducting
- 88: Final electroplated Ni-layer, about 20 micrometers thick
- 89: Carrier mounting area
- 91: Carrier, suitably 430 stainless steel
- 92: Optical fiber, suitable working up to a 1000 degrees C
- 94: Filling material, suitably brazing alloy Cusin-1 ABA paste
- 98: Pulse Arc welding, micro TIG (Tungsten Inert Gas) in Argon atmosphere
- L: Longitudinal axis

## Claims

1. Machine arrangement, comprising a machine part to be monitored (99) and comprising at least one carrier (1 ; 91) arranged on the machine part to be monitored (99), wherein a glass fiber (2 ; 92) is connected with the carrier (1 ; 91), wherein the connection between the glass fiber and the carrier (1 ; 91) is established by a metallic material (3' ; 3") which metallic material is connected by material bonding with the carrier (1 ; 91) as well as with the glass fiber,
**characterized in that**
the carrier comprises a groove in which the glass fiber is arranged, wherein a filling consisting of a brazing alloy (94) is arranged between the glass fiber and the carrier, wherein the glass fiber is embedded into the carrier by brazing, wherein the carrier is attached to the machine part to be monitored (99) by means of pulse arc welding.

2. Machine arrangement according to claim 1, **characterized in that** the glass fiber is encased by a reflective cover material.

3. Machine arrangement according to claim 1 or 2, **characterized in that** the carrier is made of stainless steel.

4. Machine arrangement according to any one of claims 1 to 3, **characterized in that** the carrier is connected by means of pulse arc welding to a machine part made of hardened steel.

## Patentansprüche

1. Maschinenanordnung, umfassend einen zu überwachenden Maschinenteil (99) und umfassend zumindest einen an dem zu überwachenden Maschinenteil (99) befestigten Träger (1; 91), wobei eine Glasfaser (2; 92) mit dem Träger (1; 91) verbunden ist, wobei die Verbindung zwischen der Glasfaser und dem Träger (1; 91) durch ein metallisches Material (3'; 3") gebildet wird, wobei das metallische Material durch Materialbindung sowohl mit dem Träger (1; 91) als auch mit der Glasfaser verbunden ist.
**dadurch gekennzeichnet, dass**
der Träger eine Nut umfasst, in der die Glasfaser angeordnet ist, wobei eine Füllung, ein Hartlot (94) umfassend, zwischen der Glasfaser und dem Träger angeordnet ist, wobei die Glasfaser durch Hartlöten in den Träger eingebettet ist, wobei der Träger mittels Impulslichtbogenschweißen an dem zu überwachenden Maschinenteil (99) befestigt ist.

2. Maschinenanordnung nach Anspruch 1, **dadurch gekennzeichnet, dass** die Glasfaser von einem reflektierenden Deckmaterial umhüllt ist.

3. Maschinenanordnung nach Anspruch 1 oder 2, **dadurch gekennzeichnet, dass** der Träger aus Edelstahl gefertigt ist.

4. Maschinenanordnung nach einem der Ansprüche 1 bis 3, **dadurch gekennzeichnet, dass** der Träger mittels Impulslichtbogenschweißen an einem aus Edelstahl gefertigten Maschinenteil befestigt ist.

## Revendications

1. Agencement de machine, comprenant une partie de machine à surveiller (99) et comprenant au moins un support (1 ; 91) disposé sur la partie de machine à surveiller (99),
une fibre de verre (2; 92) étant reliée au support (1 ; 91),
la liaison entre la fibre de verre et le support (1; 91) étant établie par un matériau métallique (3' ; 3") lequel matériau métallique étant relié par une liaison de matériau avec le support (1 ; 91) ainsi qu'avec la fibre de verre,
**caractérisé en ce que**
le support comprend une rainure dans laquelle la fibre de verre est disposée,
une garniture constituée d'un alliage de brasage (94) étant disposée entre la fibre de verre et le support, la fibre de verre étant incorporée dans le support par brasage,
le support étant fixé à la partie de machine à surveiller (99) par soudage à l'arc pulsé.

2. Agencement de machine selon la revendication 1, **caractérisé en ce que** la fibre de verre est enrobée d'un matériau de revêtement réfléchissant.

3. Agencement de machine selon la revendication 1 ou 2, **caractérisé en ce que** le support est en acier inoxydable.

4. Agencement de machine selon l'une quelconque des revendications 1 à 3, **caractérisé en ce que** le support est relié par soudage à l'arc pulsé à une partie de machine en acier trempé.
